(19) Europäisches Patentamt
European Patent Office
Office européen des brevets

(11) **EP 2 379 209 B1**

(12) **EUROPEAN PATENT SPECIFICATION**

(45) Date of publication and mention
of the grant of the patent:
**30.08.2017 Bulletin 2017/35**

(21) Application number: **09796579.2**

(22) Date of filing: **28.12.2009**

(51) Int Cl.:
**B01D 69/02** [(2006.01)]  **B01D 69/12** [(2006.01)]
**B01D 71/26** [(2006.01)]  **B29C 45/56** [(2006.01)]
**B29C 47/06** [(2006.01)]  **B01D 67/00** [(2006.01)]
**B01D 69/08** [(2006.01)]

(86) International application number:
**PCT/US2009/069565**

(87) International publication number:
**WO 2010/078234 (08.07.2010 Gazette 2010/27)**

(54) **METHOD OF MAKING POROUS MEMBRANES WITH MULTIPLE ZONES HAVING DIFFERENT PORE SIZES**

VERFAHREN ZUR HERSTELLUNG PORÖSER MEMBRANEN MIT MEHREREN ZONEN MIT VERSCHIEDENEN PORENGRÖSSEN

MÉTHODE POUR LA PRÉPARATION DE MEMBRANES POREUSES À ZONES MULTIPLES AYANT DIFFÉRENTES TAILLES DE PORES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.12.2008 US 142056 P**

(43) Date of publication of application:
**26.10.2011 Bulletin 2011/43**

(73) Proprietor: **3M Innovative Properties Company**
St. Paul, MN 55133-3427 (US)

(72) Inventors:
• **HESTER, Jonathan F.**
**Saint Paul, Minnesota 55133-3427 (US)**
• **MROZINSKI, James S.**
**Saint Paul, Minnesota 55133-3427 (US)**
• **DEHN, Derek, J.**
**Saint Paul, Minnesota 55133-3427 (US)**

(74) Representative: **Vossius & Partner**
**Patentanwälte Rechtsanwälte mbB**
**Siebertstrasse 3**
**81675 München (DE)**

(56) References cited:
**WO-A1-00/42095**  **WO-A1-01/16229**
**WO-A1-98/49225**

**Description**

FIELD

The present disclosure relates to porous membranes that have at least two zones having different average pore sizes.

BACKGROUND

WO 00/42095 deals with flame retardant microporous articles (e.g. membranes) and their production by phase separation. WO 98/49225 describes temperature-sensitive microporous films and their production.

There is a need in then are for porous membranes that have relatively high flow rates and loading capacities which offer an inexpensive alternative to expensive polyethersulfone membranes. An important application of such porous membranes is filtration of water with higher sediment amounts.

The invention relates to a
method of making a porous membrane, the method comprising:

forming a first composition in a first extruder, the first composition comprising a first crystallizable polyolefin polymer, a first nucleating agent and a diluent, wherein the first composition has a first concentration of the first nucleating agent;

forming a second composition in a second extruder, the second composition comprising a second crystallizable polyolefin polymer, a second nucleating agent and a diluent, wherein the second composition has a second concentration of the second nucleating agent;

coextruding the first composition and the second composition to form a multilayer article; and

cooling the multilayer article to allow phase separation of the diluent from the crystallizable polymers to form a porous membrane,

wherein the first crystallizable polyolefin polymer is the same as the second crystallizable polyolefin polymer,

wherein the first nucleating agent and the second nucleating agent are the same,

wherein the first concentration and the second concentration are different;

wherein the first extruder is operated at a specific energy input, the second extruder is operated at a second specific energy input and the first specific energy input is not the same as the second specific energy input;

and wherein the first specific energy input and the second specific energy input are made different by varying the screw speed of the first and second extruders, and a higher screw speed is used in the zone containing the lower concentration of the nucleating agent.

BRIEF DESCRIPTION OF THE DRAWINGS

The disclosure may be more completely understood in consideration of the following detailed description of various embodiments of the disclosure in connection with the accompanying drawings, in which:

The figures are not necessarily to scale. Like numbers used in the figures refer to like components. However, it will be understood that the use of a number to refer to a component in a given figure is not intended to limit the component in another figure labeled with the same number.

**FIG. 1** illustrates an exemplary method as disclosed herein;

**FIG. 2** illustrates an exemplary extruder system that can be utilized herein;

**FIG. 3** illustrates another exemplary extruder system configuration that utilizes two extruders;

**FIG. 4** illustrates another exemplary extruder system configuration that utilizes two extruders;

**FIG. 5** depicts an exemplary two zone porous membrane as disclosed herein;

**FIG. 6** depicts an exemplary three zone porous membrane as disclosed herein;

**FIG. 7** depicts another exemplary three zone porous membrane as disclosed herein;

**FIGs. 8A, 8B** and **8C** are scanning electron microscopy (SEM) micrographs of a cross section (**FIG. 8A**), of the first zone (**FIG. 8B**) and of the second zone (**FIG. 8C**) of the porous membrane prepared in Example 1;

**FIGs. 9A, 9B** and **9C** are scanning electron microscopy (SEM) micrographs of a cross section (**FIG. 9A**), of the first zone (**FIG. 9B**) and of the second zone (**FIG. 9C**) of the porous membrane prepared in Example 3;

**FIG 9D** is a series of surface SEM micrographs taken at the surfaces of each of 3 zones of the membrane in Example 3;

**FIG. 10** is a SEM micrograph (400X magnification) of the cross section of the porous membrane prepared in Example 4; and

**FIG. 11** is a graph of the throughput as a function of the upstream pressure of a number of different membranes as explained in Example 4.

DETAILED DESCRIPTION

In the following description, reference is made to the accompanying drawings that form a part hereof, and in which are shown by way of illustration several specific embodiments. It is to be understood that other embodiments are contemplated and may be made. The following detailed description, therefore, is not to be taken in a limiting sense but the scope is determined by the claims.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

Methods of making porous membranes as disclosed herein utilize a thermally induced phase separation (TIPS) process. TIPS methods generally involve melt blending a polymer or polymer blend with a diluent and a nucleating agent, wherein the diluent is miscible with the polymer or polymer blend at the melting temperature of the polymer or polymer blend, but phase separates when cooled below the phase separation temperature of the polymer or polymer blend. The phase separation between (i) the polymer or polymer blend and (ii) the diluent is liquid-solid. A description of the TIPS process may be found in U.S. Patents Nos. 5,976,686; 4,726,989 and 4,539,256; and U.S. Patent Application No. 2005/0058821, the subject matter of which is hereby incorporated by reference in their entirety.

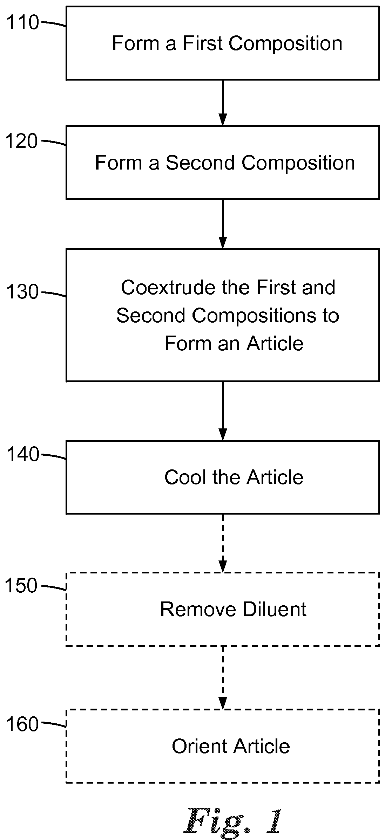

An exemplary method is depicted in **FIG. 1.** The method depicted in **FIG. 1** includes step **110,** forming a first composition and step **120** forming a second composition. The first and second compositions are generally referred to as melt blends, or more specifically first and second melt blends. Generally, the first composition and the second composition include polymer, nucleating agent and diluent.

The first and second composition include a polymer. Polymer, as that term is utilized herein includes homopolymers and copolymers. One or more than one polymer (i.e. a polymer blend) can be utilized herein. The polymer is a crystallizable polymer, one that can form a crystalline polymer phase. As used herein, the term "crystalline" with regard to polymer components includes polymers which are at least partially crystalline. In an embodiment, a crystalline polymer can have a crystallinity of greater than 20 weight % as measured by Differential Scanning Calorimetry (DSC). Crystallizable polymers suitable for use are well known and readily commercially available. Useful polymers are melt processable under conventional processing conditions. That is, upon heating they will easily soften and/or melt to permit processing in conventional equipment such as an extruder to form an article. Upon cooling a melt blend including a crystallizable polymer under controlled conditions, geometrically regular and ordered chemical structures will spontaneously form. In an embodiment, crystallizable polymers that can be used have a high degree of crystallinity.

Exemplary crystallizable polymers that can be utilized include, but are not limited to crystallizable olefin polymers,. One or more than one kind of olefin polymer can be utilized in a melt blend.

Examples of commercially available suitable crystallizable polyolefins include, but are not limited to, polypropylene, polyethylene, polypropylene, polybutylene, copolymers of two or more such olefins that may be polymerized to contain crystalline and amorphous segments, and mixtures of stereo-specific modification of such polymers, e.g., mixtures of isotactic polypropylene and atactic polypropylene. We have previously disclosed a similar approach to a PVDF TIPS membrane making system. In an embodiment, the crystallizable polymer is a polyolefin polymer. In an embodiment, the polyolefin polymer is chosen from, polypropylene, polyethylene, polypropylene, polybutylene copolymers of two or more such olefins that may be polymerized to contain crystalline and amorphous segments, and mixtures of stereo-specific modification of such polymers, e.g., mixtures of isotactic polypropylene and atactic polypropylene. In an embodiment, the crystallizable polyolefin polymer is polypropylene.

In an embodiment, the polymer can account for at least about 20% based on the total weight of the melt blend. In an embodiment, the melt blend can include from about 20% to about 70% polymer by weight of the total weight of the melt blend. In an embodiment, the melt blend can include from about 25% to about 50% polymer by weight of the total weight of the melt blend. In an embodiment, the melt blend can include from about 28% to about 32% polymer by weight of the total weight of the melt blend. In an embodiment, the melt blend can include about 30% polymer by weight of the total weight of the melt blend.

The first and second compositions, or melt blends, also include one or more nucleating agents. The nucleating agent serves the function of inducing crystallization of the polymer from the liquid state and enhancing the initiation of polymer crystallization sites in order to speed up the crystallization of the polymer. Thus, the nucleating agent employed must be a discrete solid or a liquid gel uniformly dispersed throughout the polymer at the crystallization temperature of the polymer. Because the nucleating agent serves to increase the rate of crystallization of the polymer, the size of the resultant polymer particles or spherulites (the term "spherulites" generally refers to domains of partially crystalline polymer within the porous membrane) can be reduced by including a nucleating agent. Because a nucleating agent functions in this way, the pore sizes in the two or more zones of the porous membrane can be controlled by either controlling the amount of the nucleating agent or the type of the nucleating agent included therewith.

Nucleating agents can either be melting nucleating agents or insoluble nucleating agents. A melting nucleating agent is a nucleating agent that melts during the blending of the melt blend but recrystallizes before the polymer separates from the mixture and crystallizes. Exemplary melting nucleating agents include, but are not limited to, aryl alkanoic acid compounds, benzoic acid compounds, dicarboxylic acid compounds, and sorbitol acetal compounds. Specific exemplary melting nucleating agents include, but are not limited to, dibenzylidine sorbitol, adipic acid, benzoic acid and sorbitol acetal compounds sold under the trade name MILLAD®, such as 1,3:2,4-bis(3,4-dimethylbenzylidene) sorbitol nucleating agent (MILLAD® 3988, available from Milliken Chemical, Spartanburg, SC).

An insoluble nucleating agent is a nucleating agent that does not melt during the blending of the melt blend. Generally, a material can be useful as an insoluble nucleating agent if it can be uniformly dispersed in the melt blend as discrete particles and would be capable of acting as a heterogeneous nucleation site for the polymer component. Exemplary insoluble nucleating agents include, but are not limited to, inorganic materials and pigments for example. Specific exemplary inorganic materials include, but are not limited to, bicyclo[2.2.1]heptane-2,3-dicarboxylic acid, disodium salt (commercially available from Milliken & Company (Spartanburg, SC) under the trade designation HYPER-FORM® HPN-68L), $TiO_2$, talc, fine metal particles or fine particles of a polymeric material such as polytetrafluoroethylene. Specific pigments include, but are not limited to, copper phthalocyanine blue or green pigment and D&C Red 6 (Disodium Salt), for example. The particular nucleating agent that is utilized can be selected based on the polymer being used, the desired pore size in the particular zone of the porous membrane, other factors not discussed herein, or a combination thereof.

In an embodiment, a melting nucleating agent can be utilized alone. In an embodiment, an insoluble nucleating agent can be utilized alone. In an embodiment, a melting nucleating agent can be used in combination with an insoluble nucleating agent.

The nucleating agent(s) can be present in the melt blend in an amount sufficient to initiate crystallization of the polymer at enough nucleation sites to create a polymer spherulitic matrix that forms a suitable porous membrane or can be formed into a suitable porous membrane (e.g. by orienting the membrane). The amount of nucleating agent utilized depends, at least in part on, the particular polymer utilized, the desired porosity and pore size, the particular nucleating agent utilized, other factors not discussed herein, or a combination thereof. In an embodiment, the melt blend can include less than 5% nucleating agent based on the total weight of the melt blend. In an embodiment, the melt blend can include from about 100 parts per million (ppm) to about 5% nucleating agent based on the total weight of the melt blend. In an embodiment, the melt blend can include less than 2% nucleating agent based on the total weight of the melt blend. In an embodiment, the melt blend can include from about 200 ppm to about 2% nucleating agent based on the total weight of the melt blend.

The first and second compositions or melt blends also include one or more than one diluent. As used herein, the term "diluent" is meant to encompass both solid and liquid diluents. Suitable diluents are materials that are not solvents for the crystallizable polymer at room temperature. A diluent can also be described as a material that is miscible with the polymer at a temperature above the melting temperature of the polymer but that phase separates from the polymer when cooled below the crystallization temperature of the polymer. However, at the melt temperature of the crystallizable polymer the diluent becomes a good solvent for the polymer and dissolves it to form a homogeneous solution. The homogeneous solution is extruded through, for example, a film die, and upon cooling to or below the crystallization temperature of the crystallizable polymer, the solution phase separates to form a phase-separated film. In an embodiment, a suitable diluent has a boiling point at atmospheric pressure at least as high as the melting temperature of the polymer. However, diluents having lower boiling points may be used in those instances where superatmospheric pressure may be employed to elevate the boiling point of the compound to a temperature at least as high as the melting temperature of the polymer. Generally, suitable diluents have a solubility parameter and a hydrogen bonding parameter within a few units of the values of these same parameters for the polymer.

Exemplary diluents include, but are not limited to, mineral oil, paraffin oil, petroleum jelly, wax and mineral spirits for example. Some examples of combinations of polymers and diluents include, but are not limited to, polypropylene with mineral oil, petroleum jelly, wax or mineral spirits; polypropylene-polyethylene copolymer with mineral oil; polyethylene with mineral oil or mineral spirits; and mixtures and blends thereof.

The amount of diluent can depend at least in part on the particular diluent, the particular polymer, the amount of the polymer and nucleating agent, the desired porosity and pore size of the zone being prepared, other factors not discussed herein, or combinations thereof. In an embodiment, the melt blend can include less than 80 % diluent based on the total weight of the melt blend. In an embodiment, the melt blend can include less than 75 % diluent based on the total weight of the melt blend. In an embodiment, the melt blend can include at least about 30% diluent based on the total weight of the melt blend.

The first and second compositions or melt blends can also include other materials. Such materials may be added to the melt blends, added to the material after casting, or added to the material after optional orienting of the material, as will be described below. In an embodiment, the optional ingredients are added to the melt blends, with the polymer and the diluent, as melt additives. Such melt additives include; but are not limited to, surfactants, antistatic agents, ultraviolet radiation absorbers, antioxidants, stabilizers, fragrances, plasticizers, anti-microbial agents, flame retardants, antifouling compounds, and combinations thereof.

Each optional ingredient is generally included in an amount that does not interfere with nucleation or the phase separation process. In an embodiment, the amount of each optional ingredient is not more than about 15 % based on the total weight of the melt blend. In an embodiment, the amount of each optional ingredient is generally no more than about 5 % based on the total weight of the melt blend.

The first and second compositions include the same polymer or polymer blend. It should be noted however that the amount of the polymer or polymer blend in the two compositions need not be the same.

The first melt blend and the melt blend for the second zone have different amounts of the same nucleating agent.

Different amounts lead to a final article having zones (two when a first melt blend and a second melt blend are utilized) with different pore sizes.

Further compositions, i.e. more than the first and second compositions can be formed. In an embodiment, a two zoned article can be formed with a first and a second composition. In an embodiment, a three zoned article can be formed with a first and a second composition or a three zoned article can be formed with a first, second and third composition. Articles having more than three zones can also be formed with two or more compositions.

Methods of forming the first and second compositions would be known to one of skill in the art having read this specification. In an embodiment, a first and second composition can be formed by simply combining all of the ingredients of the composition. In an embodiment, a composition can be at least partially formed in an extruder. Forming a composition in an extruder can be accomplished by adding all of the components of the composition, individually to the extruder. Forming a composition in an extruder can also include combining two components from the composition outside the extruder, adding the two component mixture to the extruder and adding the remaining components to the extruder.

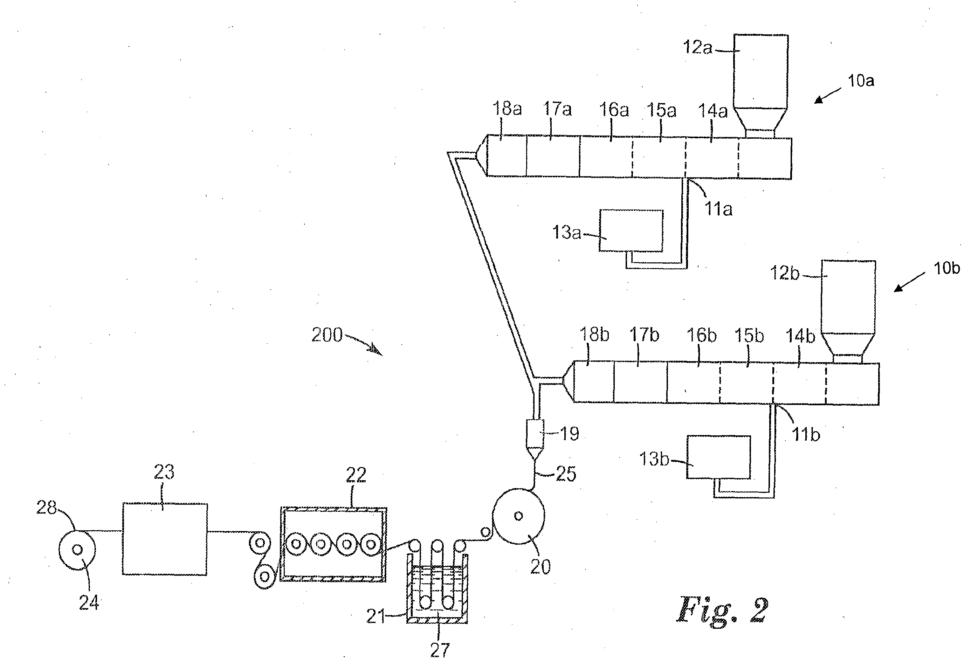

An exemplary extruder system **200** is depicted in **FIG. 2.** Such an exemplary extruder system **200** can include two extruder apparatuses **10a** and **10b.** The various components in the extruder apparatuses **10a** and **10b** are numbered similarly with the exception of the notation "a" and "b". The components in the two extruders **10a** and **10b** can, but need not be the same. Each component will be discussed generally (i.e. by referring to **"10"** for example) with the understanding that the discussion can apply equally to both (i.e. can refer to **"10a"** and **"10b").** The extruder apparatus **10** has a hopper **12** and various zones **14-16.** Polymer is introduced into hopper **12** of extruder apparatus **10.** The diluent is **13** fed into extruder **10** via a port **11** in the extruder wall between hopper **12** and an extruder exit **17.** In other embodiments, port **11** may be positioned proximate hopper **12.** Further, a nucleating agent may be pre-mixed with the diluent and incorporated into device **13** or fed as a polymer/nucleating agent master batch into hopper **12.** Such is an example of how a composition can be formed in an extruder. In an embodiment, a first composition can be formed in a first extruder **10a** and a second composition can be formed in a second extruder **10b**.

In an embodiment, one or more than one of the components of a melt blend can be mixed with another component prior to all of the components being combined. Such premixing can render the final composition more homogeneous which can lead to a more uniform article. Pre-mixing, if utilized, can be accomplished using known methods, including but not limited to using high shear mixers or bead mills. Examples of such devices include, but are not limited to, ULTRA TURRAX® T-25 Basic high shear mixer from IKA Works, Inc. (Wilmington, NC) or a MiniZETA™ bead mill from NETZSCH USA (Exton, PA).

In an embodiment for example, the nucleating agent can be premixed with the diluent or the polymer before the remaining ingredients are added. If such a premixing step is carried out, the nucleating agent can be premixed with the diluent for a period of time sufficient to uniformly disperse the nucleating agent throughout the diluent for example. Mix times typically range from about 2 to about 10 minutes depending on the volume of the diluent/nucleating agent blend, where 2 minutes can be adequate mixing time for a batch of about 1 liter and 10 minutes for a 5 liter batch.

Premixing of some of the components is not necessary to obtain a uniform dispersion of the nucleating agent within the melt blend (and the final product). For example, if an extruder assembly provides adequate mixing to uniformly distribute the nucleating agent within the polymer/diluent melt stream during extrusion (e.g., using high shear mixing elements on a twin screw extruder for example), the premixing step can be eliminated. In an embodiment, a premixing step can be utilized. Creating a uniform predispersion of the nucleating agent in the diluent or polymer masterbatch can eliminate the need to rely on a final extrusion process as the sole mixing device.

The second step in an exemplary method is step **130,** coextruding the first and second composition. The step of coextruding can be carried out using an extruder system **200** as depicted in **FIG. 2.** Extruder **10** can have at least three zones **14, 15** and **16,** which can be respectively heated at increasing, decreasing, or the same temperatures towards the extruder exit **17.** A slot die **19** having a slit gap of about 25 to about 2000 micrometers can be positioned after extruder **10.** A suitable mixing device, such as a static mixer **18,** may be positioned between extruder exit **17** and slot die **19** to facilitate blending of the composition. Alternatively, a melt pump may be positioned between extruder exit **17** and slot die **19.** While passing through extruder **10,** the melt blend is heated to a temperature at or at least about 5°C above the melting temperature of the melt blend, but below the thermal degradation temperature of the polymer. The mixture is mixed to form a melt blend that is extruded through slot die **19** as a layer **25** onto a casting wheel **20.**

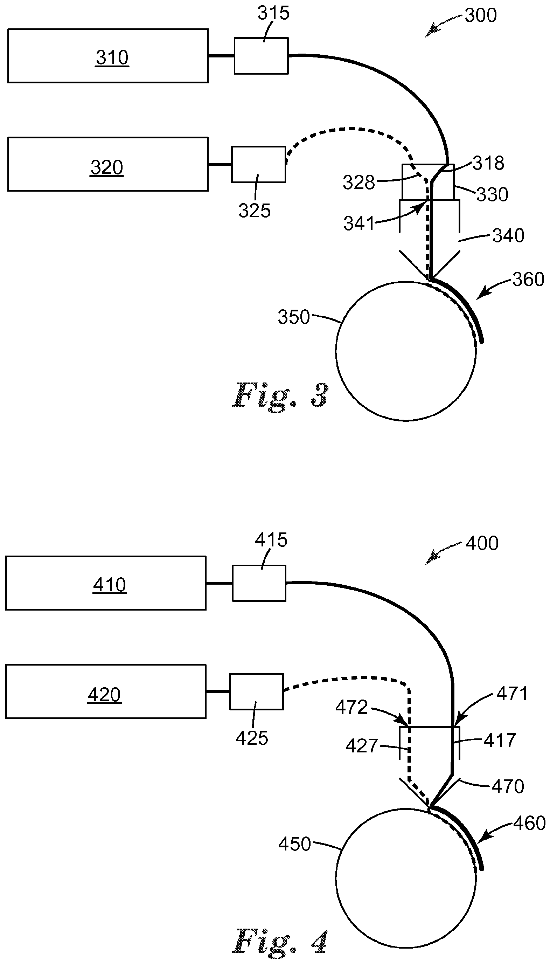

**FIG. 3** illustrates another exemplary configuration of an extruder system. This exemplary extruder system can be referred to as a feedblock extruder system **300** that can be utilized along with two extruders. The feedblock extruder system **300** in **FIG. 3** includes a first extruder **310** and a second extruder **320.** Both extruders can be similar to those exemplified in **FIG. 2** for example. The feedblock extruder system **300** also includes a first melt pump **315** and a second melt pump **325.** The first and second melt pumps **315** and **325** respectively function to afford greater control of the extrudate exiting the extruder. This can in turn function to more accurately control the back pressure on the die and ultimately the thickness of the cast film. The feedblock extruder system **300** also includes a dual layer feedblock **330.** The dual layer feedblock **330** functions to take two inputs and form one input to a die **340.** The first composition exits the first extruder **310,** is routed through the first melt pump **315,** and forms a first liquid layer **318** in the dual layer feedblock **330;** the second composition exits the second extruder **320,** is routed through the second melt pump **325,** and forms a second liquid layer **328** in the dual layer feedblock **330.** Both the first liquid layer **318** and the second liquid layer **328** exit the dual layer feedblock **330** and enter the input **341** of the single orifice die **340** and are extruded onto a casting wheel **350** to form a porous membrane **360.**

**FIG. 4** illustrates another exemplary configuration of an extruder system, a manifold extruder system **400.** The manifold extruder system **400** includes a number of components discussed above with respect to the feedblock extruder system **300,** including a first extruder **410,** a second extruder **420,** a first melt pump **415,** a second melt pump **425** and a casting wheel **450.** The manifold extruder system **400** replaces the dual layer feedblock **330** and single orifice die **340** of the feedblock extruder system **300** with a dual manifold die **470.** The dual manifold die **470** includes a first input **471** and a second input **472** as opposed to the single orifice die **340** that only included one input **341.** Because the dual manifold die **470** includes two inputs, a dual layer feedblock is not necessary. The first composition, formed in the first extruder **410** is pumped from the first melt pump **415** into the first input **471** of the dual manifold die **470** forming a first liquid layer **417;** and the second composition, formed in the second extruder **420** is pumped from the second melt pump **425** into the second input **472** of the dual manifold die **470** forming a second liquid layer **427.** The first liquid layer **417** and the second liquid layer **427** are extruded onto a casting wheel **450** to form a porous membrane **460.**

Utilizing a dual manifold die when making a two layer membrane (or a manifold die having x inputs when making a membrane having x layers) can reduce or mitigate certain disadvantages that can arise from migration of a soluble, highly mobile nucleating agent from one layer of the coextruded film to another layer of the coextruded film. Such migration occurs after the two layers are placed in contact with one another but before the temperature of the melt has dropped sufficiently to allow phase separation of the nucleating agent from the solution to occur. This migration effect tends to reduce the contrast between the pore sizes of neighboring zones in the resulting multizone membrane. One method to minimize this difficulty is minimize the contact time between the two melt streams while they are at a high temperature at which the nucleator is dissolved and highly mobile. This can more easily be accomplished when using a dual manifold die, rather than a dual feed block that allows the two layers to be in contact with one another for a comparably long period of time at a high temperature.

The next step in the exemplary method depicted in **FIG. 1** is step **140,** cooling the article. The purpose of this step is to reduce the temperature of the melt blend below the crystallization temperature in order to crystallize the polymer from the melt blend. The term "crystallization temperature" refers to the temperature at which the polymer, when present with diluent in the blend, will crystallize.

The article can be cooled using a number of methods. In an embodiment, the article can be cooled by maintaining the casting wheel (exemplified by casting wheel **350** and **450** in **FIGs. 3** and **4;** and casting wheel **20** in **FIG. 2**) at a temperature below the crystallization temperature of the polymer. In an embodiment, the article can be cooled using a quench bath at an appropriate temperature. In an embodiment, the article can be cooled using a gas flow, (*e.g.,* a room temperature air flow). In an embodiment, the article can be cooled by casting it onto a casting wheel that is maintained at a particular temperature. The particular method chosen for cooling the article would depend at least in part on the components of the composition, desired characteristics in the final article, temperature of the melt blend and the quench medium (e.g. wheel, air or water for example), other factors not discussed herein, or a combination thereof. In an embodiment that utilizes a casting wheel to cool the article, the casting wheel can either be smooth or patterned.

The exemplary method depicted in **FIG. 1** includes two optional steps, step **150** removing the diluent and step **160,** orienting the article. In an embodiment neither of these steps is carried out, only one of the steps is carried out, or both of the steps are carried out. In yet another embodiment, both of these steps are carried out, but in the reverse order (that is, the article is oriented and then the diluent is subsequently removed). Both or one of the steps function to further create regions of air adjacent to the polymer regions, i.e. make the article porous or more porous.

As stated above, optional step **150,** removing diluent from the article is not necessary, but can be undertaken. In an embodiment the diluent can be at least partially removed. The diluent can be removed (or partially removed) by extracting substantially all of the diluent from the article using a volatile solvent, such as Vertrel™ HCFC-123 available from DuPont. The solvent is then evaporated away leaving behind air voids where the diluent had been. In an embodiment that utilizes an extruder system as exemplified in **FIG. 2,** a cooled film may be removed from casting wheel **20** to a diluent removal device **21** to expose layer **25** to a solvent **27** capable of removing the diluent.

A further method of forming a membrane includes casting the extruded melt onto a patterned roll (either chilled or not) to provide areas where the blend does not contact the roll to provide a membrane of substantially uniform thickness having a patterned surface, the patterned surface providing substantially skinless areas having high porosity and skinned areas of reduced porosity. Such a method is described in U.S. Patent No. 5,120,594, the subject matter of which is hereby incorporated by reference in its entirety. The membrane material can then be oriented if desired.

Optional step **160,** orienting the article also is not necessary but can be undertaken and generally functions to increase the air void volume and thereby the porosity of the article. As used herein, "orienting" refers to stretching beyond the elastic limit so as to introduce permanent set or elongation of the article, typically to obtain at least an increase in length of about 10% or expressed as a ratio, approximately 1.1 to 1.0. Stretching can cause the polymer/nucleating agent spherulites and aggregates to be pulled apart, permanently attenuating the polymer in zones of continuity; thereby forming fibrils, forming minute voids between coated spherulites and aggregates, and creating a network of interconnected micropores.

Stretching to provide an elongation of about 10% to about 300% or more in one or two directions is typical. The actual amount of stretching will depend upon the composition of the film and the degree of porosity (for example, average pore size) desired. In an embodiment, the article can be stretched in at least one direction and in an embodiment, the article can be stretched in more than one direction, for example in both the down-web (also called the longitudinal or the machine) and transverse (also called the cross-web) directions.

Stretching may be provided by any suitable device that can provide stretching in at least one direction and may provide stretching in more than one direction, for example, both the machine and transverse directions. Stretching may be done sequentially or simultaneously in both directions. For example, a film may be sequentially oriented in the machine direction and subsequently in the transverse direction, or simultaneously in both the machine and transverse directions. Stretching can be done so as to obtain uniform and controlled porosity.

In an embodiment that utilizes an extruder system as exemplified in **FIG. 2,** a cooled film may proceed directly to a machine-direction stretching device **22** and a sequentially aligned transverse-direction stretching device **23,** and then to a take-up roller **24** for winding into a roll **28.** Further, simultaneous biaxial stretching in a single biaxial stretching unit (not shown) can also be undertaken in place of machine-direction stretching device **22** and transverse-direction stretching device **23.** Further, diluent removal device **21** or other diluent removal devices could be positioned between transverse-direction stretching device **23** and take-up roller **24** to remove diluent after one or more stretching steps.

Such permanent attenuation typically renders the article permanently translucent. Also upon orienting, if the diluent is not removed, the diluent remains coated on or surrounds, at least partially, the surfaces of the resultant polymer/nucleating agent particles or spherulites. In an embodiment, a porous article can be dimensionally stabilized according to conventional well-known techniques by heating the oriented film while it is restrained at a heat-stabilizing temperature. This is also referred to as annealing.

Methods as disclosed herein also include differentially controlling the specific energy put into the first and second extruders.

The specific energy input into the first extruder is different that the specific energy input into the second extruder.

The method as disclosed herein includes differentially controlling the specific energy input to at least a first and a second extruder while utilizing a first and second composition that have the first nucleator concentration different from the second nucleator concentration.

The way of modifying the specific energy put into an extruder according to this invention is modifying the screw speed.

Increasing the screw speed increases the specific energy input to the extruder, e.g. increasing the rotations per minute (rpm).

Utilizing different specific energy inputs into the first and second extruder can function to enhance the contrast in pore sizes between the first and second zone of a porous article formed as disclosed herein. Utilizing different specific energy inputs can also reduce or mitigate the effects of nucleating agent migration from one zone to another. Different specific energy inputs (such as different screw speeds) functions to shear (or work) the polymer into a state that when it crystallizes from the melt it forms a visually distinct and different morphology. That is, increasing the specific energy input to one melt blend causes increased degradation of the polymer in that melt blend, such that its ability to crystallize is reduced. Thus, all other parameters being equal, a layer of a multilayer membrane formed from a melt blend that was exposed to a higher specific energy input will have a lower crystallization rate upon cooling and consequently a larger average pore size. Since the rate of diffusion of the polymer component of a melt blend is much lower than that of a dissolved, small molecule nucleator, layer-to-layer interdiffusion of the polymer component occurs to only a very small extent even if two layers are in contact with each other at a high temperature for a significant period of time. This can offer an advantage over utilizing only different nucleating agents, different concentrations of nucleating agents or both, because it can be difficult to create distinct zones with specific boundaries because the diluent and nucleating agent in a first layer can seek to reach equilibrium with the nucleating agent in the adjacent layer by migrating to it or from it. This can result in interfacial mixing which can create large pore/small pore zones which are not uniform and are thicker than desired resulting in a material that is not visually distinct across the thickness of the membrane. In addition, this interfacial diffusion of the nucleator can reduce the ability to create membranes with very thin, small pore size layers (membranes with a very thin layer of small pore size can be advantageous in liquid filtration applications, where the thin small pore size layer serves to provide retention of small particles while maximizing liquid filtration rate). By using a higher specific energy input (i.e. a higher screw speed) in a zone containing a lower concentration of a nucleating agent relative to a neighboring zone, it is possible to degrade the polymer slightly in the zone containing less nucleator, depressing its crystallization temperature relative to the neighboring zone that contains the higher concentration of the nucleating agent. Unlike the soluble, low molecular weight nucleator, the high molecular weight polymer in each layer can diffuse into neighboring layers only an insignificant distance.

The specific energy input is rendered different in the two extruders by utilizing different screw speeds in the two extruders. The screw speed is simple to change, yet can provide significant and effective differences in the two zones. In an embodiment, relative differences in screw speeds of about 50% or less (e.g. one screw speed of 250 rpm and a second screw speed of 125 rpm for example) can be utilized.

The resultant porous membrane (or film or other shaped article) may also optionally be imbibed with various materials to provide any one of a variety of specific functions. The porous membrane (or film or other shaped article) may be imbibed after removing the diluent, or alternatively, the diluent may be left in the porous membrane (or film or other shaped article) prior to the imbibing process. Several methods are known for imbibing porous membrane (or film or other shaped article) including, but not limited to, multiple dipping, long soak, vacuum, hydraulic press and evaporation. Examples of imbibing materials that could be employed to at least partially fill a portion of the pores in the porous membranes as disclosed herein include, but are not limited to, pharmaceuticals, fragrances, anti-microbials, antistatic agents, surfactants, pesticides, chromatography functional chemistries, and solid particulate materials. Certain materials, such as antistatic agents or surfactants, may be imbibed without prior removal of the diluent.

The porous membrane (or film or other shaped article), either before or after removal of the diluent, may be further modified by depositing any one of a variety of compositions thereon using any one of a variety of known coating or deposition techniques. For example, the porous membrane (or film or other shaped article) may be coated with metal by vapor deposition or sputtering techniques, or coated with adhesives, aqueous or solvent base coating compositions or dyes. Coating may be accomplished by conventional techniques such as roll coating, spray coating, dip coating or any other coating techniques. Although not shown in exemplary apparatus **200** of **FIG. 2,** an in-line coating station and/or drying oven could also be positioned, for example, between transverse-direction stretching device **23** and take-up roller **24** to provide a coating on one or both outer surfaces of the stretched membrane.

The porous membrane (or film or other shaped article) may be laminated to any one of a variety of other structures, such as other sheet materials (e.g., other porous membranes, fabric layers (e.g., woven, nonwoven, knitted, or mesh fabrics), polymeric film layers, metal foil layers, foam layers, or any combination thereof) to provide composite structures. Lamination can be accomplished by conventional techniques such as adhesive bonding, spot welding, or by other techniques that do not destroy or otherwise interfere with the porosity or create undesirable porosity or perforations.

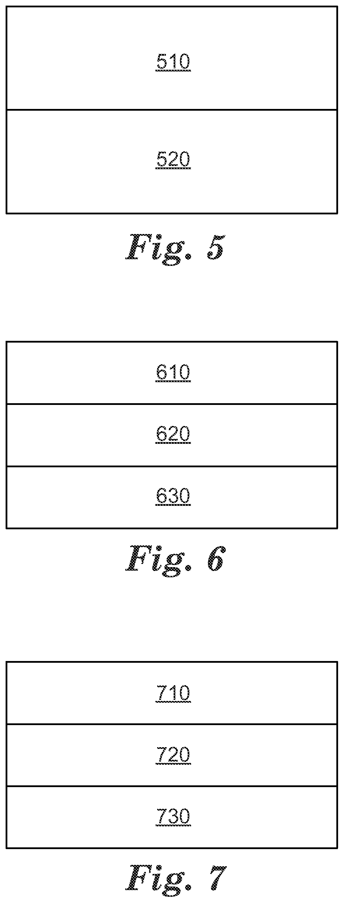

Methods as disclosed above can be utilized to form a porous articles or a porous membrane. A porous membrane obtained by the method disclosed herein generally includes at least two zones. **FIG. 5** depicts an exemplary porous membrane that includes a first zone **510** and a second zone **520**. The first zone **510** can be adjacent to the second zone **520** and in an embodiment can be directly adjacent to the second zone **520**. In an embodiment, such as that depicted in **FIG. 5,** the first zone **510** can be disposed on the second zone **520**. In another embodiment (not illustrated), the second zone **520** can be disposed on the first zone **510**.

In the embodiment depicted in **FIG. 5,** the polymer is the same in the first zone **510** and the second zone **520**. The first zone **510** has a first average pore size and the second zone **520** has a second average pore size. The first zone **510** also includes a first nucleating agent having a first concentration within the first zone. The second zone **520** also includes a second nucleating agent having a second concentration. In an embodiment, the amount of the first nucleating agent in the first zone and the amount of the second nucleating agent in the second zone are in a range from about 0.1 wt% to about 5.0 wt% based on the total weight of the particular zone.

The first nucleating agent is the same as the second nucleating agent; the first concentration is not the same as the second concentration.

The difference in the concentration of the nucleating agent between the first zone **510** and the second zone **520** lead to the difference in the first average pore size of the first zone **510** and the second average pore size of the second zone **520.** Where the first concentration is different than the second concentration and the identity of the nucleating agent in the first zone and the second zone are the same, the relative concentrations in the two zones can dictate, at least in part, the relative pore sizes in the two zones. For example, where the first concentration is less than the second concentration, the first average pore size will generally be greater than the second average pore size. Conversely, where the first concentration is greater than the second concentration, the first average pore size will generally be less than the second average pore size.

Porous membranes as disclosed herein can also include more than two zones. An exemplary embodiment, depicted in **FIG. 6** includes three zones, a first zone **610,** a second zone **620** and a third zone **630.** The polymer in all three zones is the same. The first zone **610** can be adjacent to the second zone **620** and in an embodiment can be directly adjacent to the second zone **620.** The second zone **620** can be adjacent to the third zone **630** and in an embodiment can be directly adjacent to the third zone **630.** In an embodiment such as that depicted in **FIG. 6,** the first zone **610** can be disposed on the second zone **620** and the second zone can be disposed on the third zone **630.**

In the embodiment depicted in **FIG. 6,** the polymer is the same in the first zone **610,** the second zone **620** and the third zone **630.** The first zone **610** has a first average pore size, the second zone **620** has a second average pore size and the third zone **630** has a third average pore size. The first zone **610** also includes a first nucleating agent having a first concentration within the first zone. The second zone **620** also includes a second nucleating agent having a second concentration within the second zone. The third zone **630** also includes a third nucleating agent having a third concentration within the third zone. In an embodiment, the first nucleating agent is the same as the second nucleating agent or the third nucleating agent; and the second nucleating agent is the same as the third nucleating agent, but all three having different amounts. In an embodiment, the first concentration is not the same as the second concentration or the third concentration; and the second concentration is not the same as the third concentration. In an embodiment, the first nucleating agent is not the same as the second nucleating agent or the third nucleating agent and the second nucleating agent is not the same as the third nucleating agent; and the first concentration is not the same as the second concentration or the third concentration and the second concentration is not the same as the third concentration.

The exemplary porous membrane illustrated by **FIG. 7** also includes three zones. This porous membrane includes a first zone **710,** a second zone **720** and a third zone **730.** This particular embodiment has a sandwich structure with two zones that are the same (the first zone **710** and the third zone **730**) sandwiching a different zone (the second zone **720**). The polymer in all three zones is the same. The first zone **710** has a first average pore size, the second zone **720** has a second average pore size and the third zone **730** has a third average pore size. The first zone **710** also includes a first nucleating agent having a first concentration within the first zone. The second zone **720** also includes the same or a second nucleating agent having a second concentration within the second zone. The third zone **730** also includes a third nucleating agent having a third concentration within the third zone. In an embodiment, the first nucleating agent and the third nucleating agent are the same but they are not the same as the second nucleating agent. In an embodiment, the first concentration and the third concentration are the same, but they are not the same as the second concentration. In an embodiment, the first nucleating agent is the same as the third nucleating agent, but they are not the same as the second nucleating agent; and the first concentration is the same as the third concentration but they are not the same as the second concentration.

Porous membranes having more than three zones are also contemplated by this disclosure. Porous membranes as disclosed herein can have an average layer thickness that varies depending on its intended use. Typically, each porous membrane layer ranges from about 5 microns to about 500 microns in average thickness.

Porous membranes as disclosed herein can have a degree of resistance to fluid flow therethrough that may vary depending on its intended use, process conditions, and materials used. One method of measuring the fluid flow through a porous membrane is to measure the resistance to gas flow through a porous membrane as expressed as the time necessary for a given volume of gas to pass through a standard area of the porous membrane under standard conditions as specified in ASTM D726-58, Method A, also referred to herein as "the Gurley porosity" or "the Gurley resistance to air flow." The Gurley resistance to air flow is the time in seconds for 50 cubic centimeters (cc) of air, or another specified volume, to pass through 6.35 cm$^2$ (one square inch) of the porous membrane at a pressure of 124 mm of water.

Porosity of porous membranes as disclosed herein may be represented by a calculated porosity value, $P_{cal}$, based on (i) the measured bulk density of the stretched film ($d_{sf}$) and (ii)(a) the measured bulk density of the pure polymer before stretching (dpp) or (ii)(b) the measured bulk composite density of pure polymer plus diluent before stretching ($d_{cd}$) using the following equation:

$$P_{cal} = [1-(d_{sf}/(d_{pp}) \text{ or } (d_{cd}))] \times 100\%.$$

Porous membranes (and articles containing at least one porous membrane) as disclosed herein can be in the form of a sheet or film, although other article shapes are contemplated and may be formed. For example, the article may be in the form of a sheet, tube, filament, or hollow fiber. Porous membranes (and articles containing at least one porous membrane) as disclosed herein may be free-standing films (or other shaped articles) or may be affixed to a substrate, such as structures made from materials that are polymeric, metallic, cellulosic, ceramic, or any combination thereof, depending upon the application, such as by lamination.

Porous membranes as disclosed herein can also offer advantageous throughputs. Throughput, as utilized herein, refers to the volume of a fluid that a filter (membrane) will process at a target constant flow rate before a limiting trans-membrane pressure is reached. Throughput can have units of volume of fluid per unit filter area. The throughput of a membrane can be readily measured by mounting a sample of the membrane in a suitable housing and supplying, for example, using a peristaltic pump, a test fluid to one side of the membrane at a constant flow rate. The pressure upstream of the membrane can then be measured using a pressure transducer or gauge and the quantity of test fluid processed through the membrane may be continuously monitored with a mass balance. Once the pressure upstream of the membrane increases to a defined pressure, supply of test fluid to the membrane is stopped and the total mass or volume of test fluid processed through the membrane is recorded as the throughput, typically in units of volume or mass per unit membrane area. The throughput enhancement of a multizone membrane may be assessed by comparing its throughput to that of a symmetric, or single-zone, membrane having the same bubble point pore size. In an embodiment, the throughput of a multizone membrane may be at least 50% greater than that of a symmetric membrane having the same bubble point pore size. In an embodiment, the throughput of a multizone membrane may be at least 2 times as great as that of a symmetric membrane having the same bubble point pore size. In an embodiment, the throughput of a multizone membrane may be at least 3 times as great as that of a symmetric membrane having the same bubble point pore size. In an embodiment, the throughput of a multizone membrane may be at least 4 times as great as that of a symmetric membrane having the same bubble point pore size.

In some cases, it may be advantageous to prepare a multizone membrane in such a way that there is a sharp and distinct boundary between adjacent zones of different average pore size, i.e. between the first and second zones. This could be advantageous, for example, in the preparation of membranes that retain small particles in a fluid while exhibiting a high flux by virtue of a very thin, well-defined zone of small average pore size to retain the small particles, the remaining zones in the membrane having a higher average pore size to facilitate a high flux. In other cases, it may be advantageous to prepare a multizone membrane in such a way that the interfaces between adjacent zones of different average pore size are diffuse and characterized by a gradient in pore size, the pore size gradually changing between that characteristic of the first zone and that characteristic of the adjacent second zone. This might be advantageous, for example, in the preparation of a membrane having a particle loading capacity, or throughput, with respect to certain fluids containing particles having a distribution of sizes. In the case where distinct boundaries are desired, it may be advantageous to use the manifold die co-extrusion approach depicted schematically in FIG. 4 and/or an insoluble nucleating agent in at least one of the zones. In the case where diffuse boundaries are desired, it may be advantageous to use the multilayer feedblock co-extrusion approach depicted schematically in FIG. 3 and/or a melting nucleator in at least one of the zones to facilitate diffuse zone-to-zone pore size transitions by allowing the soluble nucleator to interdiffuse between adjacent melt streams while they are in the die.

The porous membranes (and articles containing at least one porous membrane) as disclosed herein may be used in a variety of applications including, but not limited to, filters for purification, sterilization, or both of fluid streams in the biopharmaceutical, food and beverage, or electronics industries for example; filters for the filtration of purification of water or wastewater; substrates for holding gel formulations and functional coatings; and liquid/liquid extraction devices.

Further, porous membranes (and articles containing at least one porous membrane) as disclosed herein can be useful in the formation of smaller pore size membranes wherein particles and/or coatings are introduced into the porous structure of porous membranes (and articles containing at least one porous membrane) as disclosed herein to impart functionality to the outer and/or interstitial surfaces of porous membranes (and articles containing at least one porous membrane) as disclosed herein. For example, topical coatings, outer and/or interstitial surface treatments or gels may be incorporated into porous membranes (and articles containing at least one porous membrane) as disclosed herein to impart functionality (e.g., hydrophilicity, selective low binding characteristics, or selective high binding characteristics) to porous membranes (and articles containing at least one porous membrane) as disclosed herein. By starting with larger pore size membranes, porous membranes (and articles containing at least one porous membrane) as disclosed herein can enable processing flexibility for producing a variety of specialized, functionalized porous membranes (and articles containing at least one porous membrane) having an appropriate coating/interstitial filling material and still be capable of an acceptable fluid flow rate through the porous membrane (and articles containing at least one porous membrane). Exemplary techniques and materials for providing functionalized surfaces to porous membranes as disclosed herein are described in US Patent Publication No. 20070154703, to Waller et al., the entire disclosure of which is incorporated herein by reference thereto.

EXAMPLES

Example 1

A co-extruded two zone membrane was prepared using an apparatus similar to that shown in **FIG. 4.** The membrane had different nucleating agent concentrations and different screw speeds in the two zones.

Melt blend number 1 was processed as follows. Polypropylene (PP) polymer pellets (F008F from Sunoco Chemicals, Philadelphia, PA) were introduced into the hopper of a 40 mm co-rotating twin screw extruder with a screw speed of 225 RPM. The nucleating agent (MILLAD® 3988 nucleating agent from Milliken Chemical, Spartanburg, SC), was premixed with the mineral oil diluent (Mineral Oil Superla White 31 Amoco Lubricants) with a ULTRA TURRAX® T-25 Basic high shear mixer from IKA Works, Inc. (Wilmington, NC) for about 5 minutes for each 4 liter batch. The weight ratio of the PP polymer/diluent/nucleating agent was 29.72/70.2/0.08 respectively. The total extrusion rate was about 13.6 kilograms per hour (kg/hr). The extruder had eight zones with the temperature profile set at 260° C in the mixing zones to 177° C at the extruder outlet.

Melt blend number 2 was processed as follows. Polypropylene (PP) polymer pellets (F008F from Sunoco Chemicals, Philadelphia, PA) were also introduced into the hopper of a 25 mm co-rotating twin screw extruder with a screw speed of 100 RPM. The nucleating agent (MILLAD® 3988 nucleating agent from Milliken Chemical, Spartanburg, SC), was premixed with the mineral oil diluent (Mineral Oil Superla White 31 Amoco Lubricants) with a ULTRA TURRAX® T-25 Basic high shear mixer from IKA Works, Inc. (Wilmington, NC) for about 5 minutes for each 4 liter batch. The weight ratio of the PP polymer/diluent/nucleating agent was 29.78/70.2/0.2 respectively. The total extrusion rate was about 2.72 kilograms per hour (kg/hr). The extruder had eight zones with the temperature profile set at 177° C.

The dual zoned melt stream came out of a multi-manifold die having an orifice with a width of 25.4 cm as a single sheet and was subsequently cast on a pyramid 100 patterned casting wheel maintained at 21° C at 4.6 meters/minutes (m/min). The film was fed into a solvent washing process where the mineral oil was removed using Vertrel HCFC 123 (DuPont). The film was then dried at ambient conditions to remove the solvent. After drying, the film was length and width stretched to 1.7 x 3.125 at 132° C.

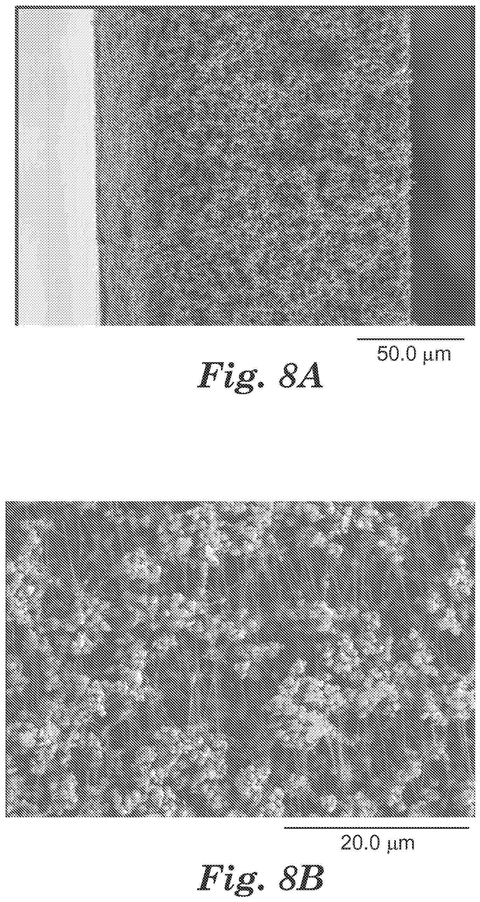

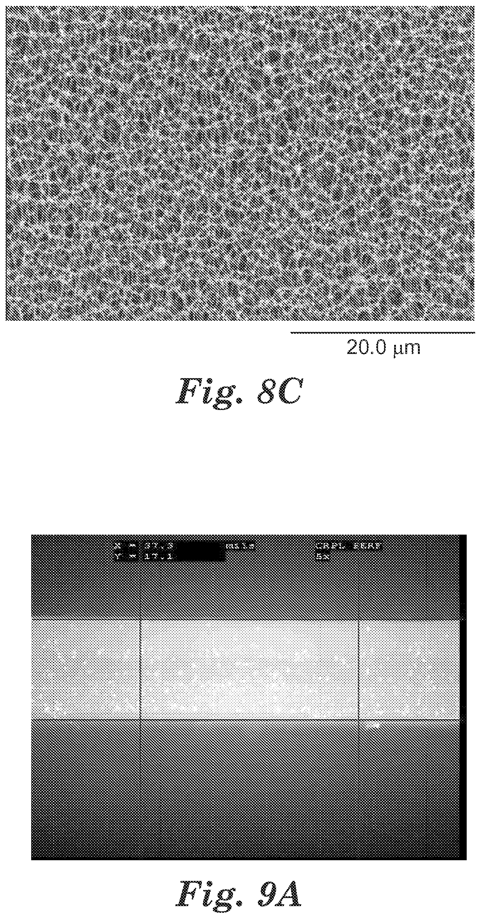

Scanning electron microscopy (SEM) photos of the cross section and both surfaces were taken and can be seen in **FIGs. 8A - 8C. FIG. 8A** shows the entire membrane at a magnification of 11.7 mm x 600; **FIG. 8B** shows the zone with the large pore size at a magnification of 11.8 mm x 2500; and **FIG. 8C** shows the zone with the small pore size at a magnification of 11.8 mm x 2500. The small pore size layer is in sharp contrast to the large pore size layer where it is about 18% of the thickness. The small pore size layer, based on mass of materials going into the extruder, was about 17 wt%, which is an excellent correlation to the actual thickness showing control over each layer.

The thickness of the overall membrane was measured. The bubble point pore size was measured using a forward flow bubble point pressure apparatus. A disc of each membrane was saturated with a mixture of 60 wt % isopropyl alcohol and 40 wt % water and mounted in a 90-mm diameter membrane holder with zone A on the upstream side. A pressure controller (Type 640, available from MKS Instruments, Inc.) regulated the supply of nitrogen gas to the upstream side of the membrane. The mass flow of gas downstream of the membrane was measured using a mass flow meter (Mass-Flo™ meter, model no. 179A12CS3BM, available from MKS Instruments, Inc.). At the beginning of the test, nitrogen gas was supplied to the upstream side of the membrane at a pressure of 10.3 kPa (1.5 psi). The pressure was then increased by increments of 1.38 kPa (0.2 psi) every 0.2 s. This resulted in a measured mass flow, downstream of the membrane, initially roughly constant at a value representative of the rate of diffusional flow of nitrogen through the liquid-filled pores of the membrane, followed by a temporary increase in the measured mass flow as liquid was displaced from the larger pores of zone A, followed by a return to a low mass flow representative of the rate of diffusional flow of nitrogen through the liquid-filled pores of zone B, followed by a monotonic increase in the measured mass flow as liquid was displaced from the pores of zone B. The bubble point pressure of zone A was taken as the applied nitrogen pressure at the onset of the first increase in measured mass flow. The bubble point pressure of zone B was taken as the applied nitrogen pressure at the onset of the second increase in measured mass flow. It is well known to those skilled in the art that the bubble point pressure of a membrane, or of the zone of a membrane, is inversely related to the largest pore size in the pore size distribution according to the Laplace equation.

**Table 1**

| Example Number | Thickness (mm) | Bubble point pore size ($\mu$m) |
|---|---|---|
| 1 | 1.42 | 0.42 |

Example 2

Five two zone membranes were made utilizing an apparatus similar to that shown in **FIG. 3.** The membranes had different nucleating agent concentrations and different screw speeds in the two zones.

Each of the melt streams was prepared using 70.2 wt % mineral oil (available as Duoprime Oil 300 from Citgo), and 29.8 wt % of a blend of polypropylene (available from Sunoco Chemical as F008F) and 1,3:2,4-bis(3,4-dimethylbenzylidene) sorbitol nucleating agent (Millad™ 3988, available from Milliken Chemical). The Millad™ nucleator concentration and extruder screw speed used to prepare zones A and B of each of the membranes is shown in Table 2.

For each membrane, a melt stream A was melt mixed and conveyed in a 40 mm twin screw extruder having 8 temperature zones ramping down in temperature from 271 °C in the melt mixing sections to 177 °C at the extruder outlet. A melt stream B was melt mixed and conveyed in a 25 mm twin screw extruder having 6 temperature zones ramping down from 260 °C in the melt mixing sections to 177 °C at the extruder outlet. A melt pump positioned between the die outlet of each extruder and the feedblock regulated the flow of material from each extruder to the feedblock, such that the extruder output rates of melt streams A and B were 10.9 kg/h and 3.6 kg/h, respectively. Melt streams A and B were combined together in the feedblock and fed to the die to form a film comprising zones A and B, respectively. The feedblock and die temperatures were 177 °C. The 2-zone film was drop-cast onto a chill roll held at 60 °C such that zone B was in contact with the chill roll surface. The mineral oil was then removed from the cast film by washing it with an extraction solvent (Vertrel™ HCFC-123 available from DuPont), and the film was oriented 1.6x in a length orienter and 2.5x in a tenter to form a 2-zone membrane.

The zone A and zone B bubble point pressures of each membrane were measured using a forward flow bubble point pressure apparatus. A disc of each membrane was saturated with a mixture of 60 wt % isopropyl alcohol and 40 wt % water and mounted in a 90-mm diameter membrane holder with zone A on the upstream side. A pressure controller (Type 640, available from MKS Instruments, Inc.) regulated the supply of nitrogen gas to the upstream side of the membrane. The mass flow of gas downstream of the membrane was measured using a mass flow meter (Mass-Flo™ meter, model no. 179A12CS3BM, available from MKS Instruments, Inc.)

At the beginning of the test, nitrogen gas was supplied to the upstream side of the membrane at a pressure of 10.3 kPa (1.5 psi). The pressure was then increased by increments of 1.38 kPa (0.2 psi) every 0.2 s. This resulted in a measured mass flow, downstream of the membrane, initially roughly constant at a value representative of the rate of diffusional flow of nitrogen through the liquid-filled pores of the membrane, followed by a temporary increase in the measured mass flow as liquid was displaced from the larger pores of zone A, followed by a return to a low mass flow representative of the rate of diffusional flow of nitrogen through the liquid-filled pores of zone B, followed by a monotonic increase in the measured mass flow as liquid was displaced from the pores of zone B. The bubble point pressure of zone A was taken as the applied nitrogen pressure at the onset of the first increase in measured mass flow. The bubble point pressure of zone B was taken as the applied nitrogen pressure at the onset of the second increase in measured mass flow. It is well known to those skilled in the art that the bubble point pressure of a membrane, or of the zone of a membrane, is inversely related to the largest pore size in the pore size distribution according to the Laplace equation.

**Table 2**

| Sample No. | Nucleating Agent Concentration (ppm) | | Screw Speed (rpm) | | Nucl. Agent Ratio (B/A) | Screw Speed Ratio (A/B) | Bubble Point Pressure (psi) | | Bubble Point Ratio (B/A) |
|---|---|---|---|---|---|---|---|---|---|
| | Zone A | Zone B | Zone A | Zone B | | | Zone A | Zone B | |
| 3A * | 750 | 750 | 125 | 125 | 1.0 | 1.0 | 8.35 | 8.35 | 1.00 |
| 3B * | 750 | 1200 | 125 | 125 | 1.6 | 1.6 | 7.35 | 8.60 | 1.17 |
| 3C * | 750 | 1200 | 250 | 250 | 1.6 | 1.0 | 6.60 | 8.20 | 1.24 |
| 9D * | 750 | 750 | 225 | 125 | 1.0 | 1.8 | 7.80 | 7.80 | 1.00 |
| 3E | 750 | 1200 | 250 | 125 | 1.6 | 2.0 | 6.75 | 9.90 | 1.47 |
| * Samples 3A,B,C,D are not according to the invention | | | | | | | | | |

Table 2 shows the zone A and zone B nucleating agent concentrations and extruder screw speeds for each of the membranes, as well as the measured bubble point pressures for zone A and zone B. Example 3A was prepared with identical soluble nucleator concentrations and screw speeds for zones A and B, resulting in no measured difference between the pore sizes in zones A and B. Examples 3B and 3C were prepared with different nucleator concentrations in zones A and B. For these membranes, zone B, containing more of the nucleator, had a pore size moderately smaller than that of zone A. Example 3E was prepared with a higher concentration of nucleator in zone B, and additionally with a higher screw speed for zone A. This resulted in a significantly greater contrast between the pore sizes in zones A and B. Example 3D was prepared with identical nucleator concentrations in zones A and B but with a higher screw speed for zone A, resulting in no measured difference between the pore sizes in the two zones.

This example illustrates that multizone membranes having zones of different pore size can be prepared by coextruding melt streams having different concentrations of a soluble nucleator. The contrast between the pore sizes in the zones can be significantly enhanced, however, by additionally employing a higher screw speed in the zone with the lower nucleator concentration.

Example 3 not according to the invention

A first melt stream A was prepared by melt mixing and conveying in a 40 mm twin screw extruder a mixture containing 69.0 wt % mineral oil (Drakeol 32 available from Penreco), 30.9 wt % polypropylene (available from Sunoco Chemical as F008F), and 0.1 wt % 1,3:2,4-bis(3,4-dimethylbenzylidene) sorbitol nucleating agent (Millad™ 3988 available from Milliken Chemical). The 40 mm twin screw extruder had 8 temperature zones ramping down in temperature from 271 °C in the melt mixing sections to 177 °C at the extruder outlet. The extrusion rate of the 40 mm twin screw extruder was 14.5 kg/h.

A second melt stream B was prepared by melt mixing and conveying in a 25 mm twin screw extruder a mixture containing 69.0 wt % mineral oil (Drakeol 32 available from Penreco), 28.4 wt % polypropylene (available from Sunoco Chemical as F008F), 0.1 wt % 1,3:2,4-bis(3,4-dimethylbenzilidene) sorbitol nucleating agent (Millad™ 3988 available from Milliken Chemical), and 2.5 wt % of a polypropylene-polyethylene copolymer masterbatch containing 20 wt % copper phthalocyanine blue pigment (masterbatch available from Tokyo Printing Ink). The 25 mm twin screw extruder had 6 temperature zones ramping down in temperature from 260 °C in the melt mixing sections to 177 °C at the extruder outlet. The extrusion rate of the 25 mm twin screw extruder was 1.8 kg/h.

Melt stream A was fed to the outside layers of a 3 layer feedblock and melt stream B was fed to the center layer of the feedblock. The 3 layers were combined together in the feedblock and fed to a single orifice film die to form an A-B-A coextruded 3-zone film. The feedblock and die temperatures were 177 °C. The 3-zone film was drop-cast onto a chill roll held at 60 °C such that zone B was in contact with the chill roll surface. The mineral oil was then removed from the cast film by washing it with an extraction solvent (Vertrel™ HCFC-123 available from DuPont), and the film was oriented 2.0x in a length orienter and 3.0x in a tenter to form a 3-zone membrane.

FIG. 9A is an optical micrograph of the resulting 3-zone membrane, clearly showing a distinct central through-thickness zone that is blue in color and exhibits sharp interfaces with the two outer zones. The blue color in the center zone is due to the presence of the copper phthalocyanine blue pigment in that zone.

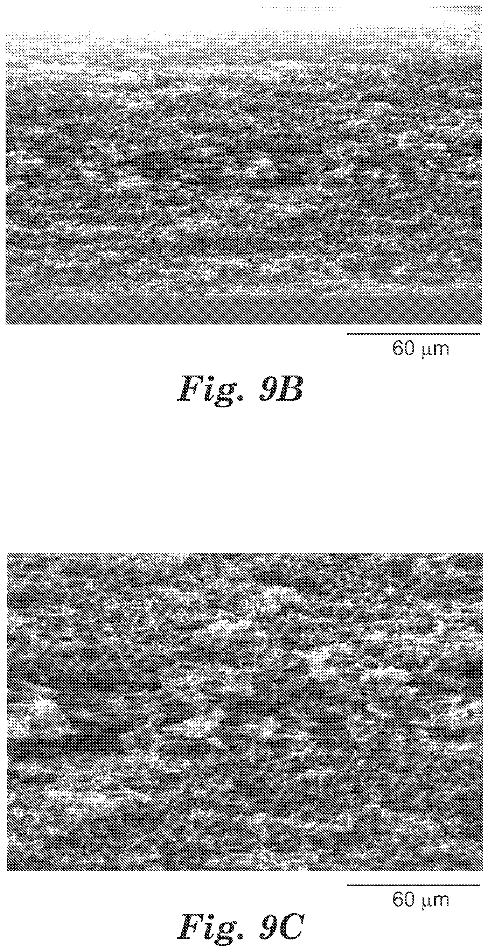

FIG. 9B and 9C are cross-sectional SEM micrographs of the 3-zone membrane at two different magnifications (FIG. 9B has a magnification of 1500; and FIG. 9C has a magnification of 3000). In these micrographs, a zone of larger pore size can clearly be seen between the two zones of smaller pore size.

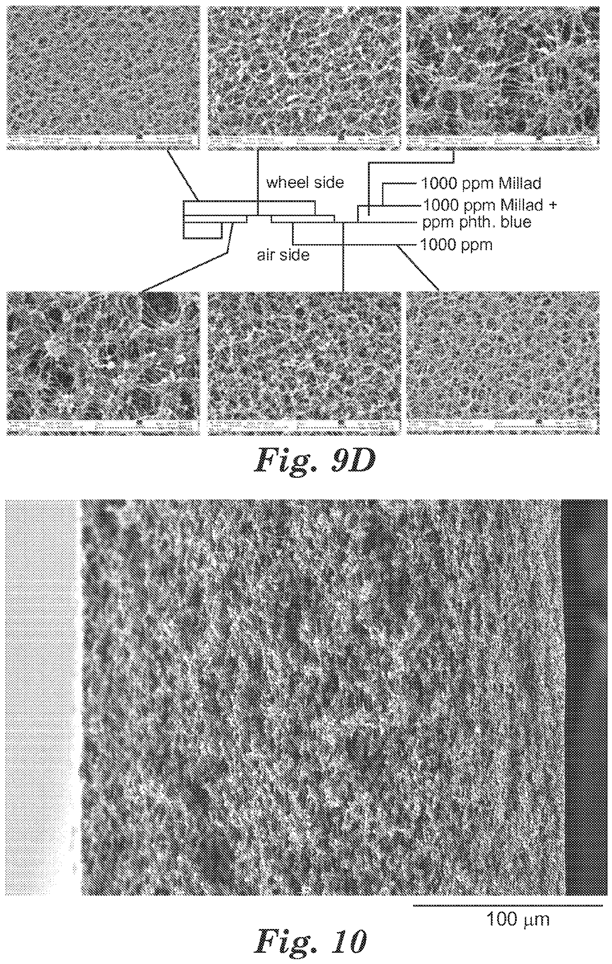

It was discovered that it was possible to peel apart the 3 zones of the 3-zone membrane. FIG. 9D contains surface SEM micrographs taken at the surfaces of each of the 3 zones. Again, it is clearly seen that the pore size in the center zone is significantly larger than the pore size in either of the outer two zones.

It is thought that the insoluble copper phthalocyanine blue, which itself acts as a nucleator for polypropylene, modified the action of the soluble Millad™ nucleator in the center zone of the membrane, resulting in a larger pore size. The insolubility of the blue strongly reduced its ability to migrate from the center layer into either of the two outer layers during the coextrusion process, resulting in very distinct transitions between the membrane zones.

Example 4

A 2-zone polypropylene membrane was prepared using an apparatus similar to that shown in FIG. 3. Two separate melt streams were coextruded into a 2-layer feedblock which combined the two streams and fed them to a single orifice film die.

A first melt stream A was prepared by melt mixing and conveying in a 40 mm twin screw extruder a mixture containing 70.7 wt % mineral oil (available as Duoprime Oil 300 from Citgo), 29.25 wt % polypropylene (available from Sunoco Chemical as F008F), and 0.05 wt % 1,3:2,4-bis(3,4-dimethylbenzylidene) sorbitol nucleating agent (Millad™ 3988 available from Milliken Chemical). The 40 mm twin screw extruder had 8 temperature zones ramping down in temperature from 271 °C in the melt mixing sections to 177 °C at the extruder outlet.

A second melt stream B was prepared by melt mixing and conveying in a 25 mm twin screw extruder a mixture containing 70.7 wt % mineral oil (available as Duoprime Oil 300 from Citgo), 28.0 wt % polypropylene (available from Sunoco Chemical as F008F), and 1.3 wt % 1,3:2,4-bis(3,4-dimethylbenzilidene) sorbitol nucleating agent (Millad™ 3988

available from Milliken Chemical). The 25 mm twin screw extruder had 6 temperature zones ramping down in temperature from 260 °C in the melt mixing sections to 177 °C at the extruder outlet. A melt pump positioned between the die outlet of each extruder and the feedblock regulated the flow of material from each extruder to the feedblock, such that the extruder output rates of melt streams A and B were 15.0 kg/h and 3.2 kg/h, respectively.

Melt streams A and B were combined together in the feedblock and fed to the die to form a film comprising zones A and B, respectively. The feedblock and die temperatures were 177 °C. The 2-zone film was drop-cast onto a chill roll held at 60 °C such that zone B was in contact with the chill roll surface. The mineral oil was then removed from the cast film by washing it with an extraction solvent (Vertrel™ HCFC-123 available from DuPont), and the film was oriented 1.8x in a length orienter and 2.5x in a tenter to form a 2-zone membrane, which was labeled with sample number 1847-45. A cross-section of membrane 1847-45 was imaged by SEM and is shown in **FIG. 10.**

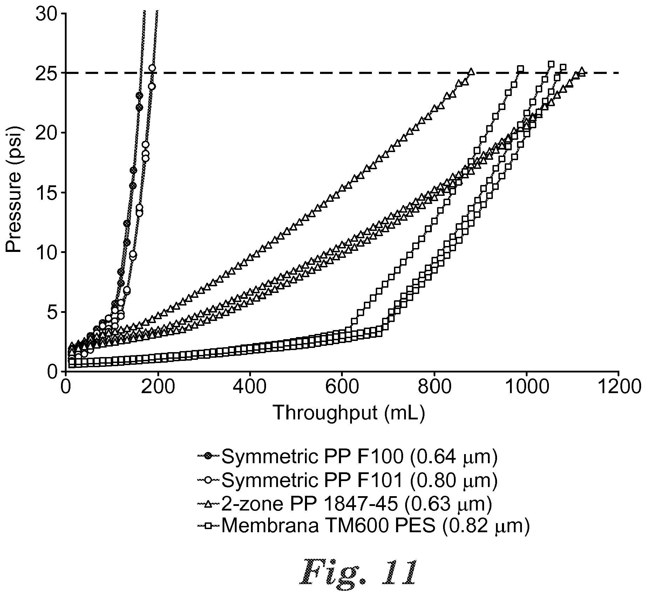

The forward flow bubble point pressure apparatus described in Examples 1 and 3 was used to measure the bubble point pressure of each of four membrane samples. The membrane samples were a 2-zone polypropylene membrane, symmetric polypropylene membrane F100 (product no. 70-0708-1241-1 available from 3M Company), symmetric polypropylene membrane F101 (product no. 70-0708-1241-0 available from 3M Company), and a polyethersulfone membrane having a gradient through-thickness pore morphology (TM600 available from Membrana). The bubble point pore diameters of the membranes were estimated using the Laplace equation, and appear in the legend of **FIG. 11**.

A sample disc of each membrane was placed in a 47-mm membrane holder. A test contaminant solution was prepared by suspending molasses (Grandma's Robust, available from B&G Foods, Inc., Roseland, NJ) in deionized water at a concentration of 1 g/L. The test contaminant solution was filtered through the membrane at a constant feed rate of 40 mL/min, and the pressure upstream of the membrane was monitored using a pressure transducer. The pressure increased monotonically throughout the test due to occlusion of the membrane pores by material in the test contaminant solution. The test was terminated when the pressure upstream of the membrane reached a value of 172.4 kPa (25 psig).

**FIG. 11** shows the throughput, or the cumulative volumetric flow, of the test solution through two replicates of each of the membranes as a function of the upstream pressure. The 2-zone polypropylene membrane of this disclosure exhibits a throughput substantially greater than that of either of the two symmetric polypropylene membranes, and roughly equivalent to that of the gradient pore polyethersulfone benchmark membrane, even though it has the smallest bubble point pore size of the samples.

Thus, embodiments of porous membranes with multiple zones having different pore sizes are disclosed. One skilled in the art will appreciate that the present disclosure can be practiced with embodiments other than those disclosed. The disclosed embodiments are presented for purposes of illustration and not limitation, and the present disclosure is limited only by the claims that follow.

**Claims**

1. A method of making a porous membrane, the method comprising:

   forming a first composition in a first extruder, the first composition comprising a first crystallizable polyolefin polymer, a first nucleating agent and a diluent, wherein the first composition has a first concentration of the first nucleating agent;
   forming a second composition in a second extruder, the second composition comprising a second crystallizable polyolefin polymer, a second nucleating agent and a diluent, wherein the second composition has a second concentration of the second nucleating agent;
   coextruding the first composition and the second composition to form a multilayer article; and
   cooling the multilayer article to allow phase separation of the diluent from the crystallizable polymers to form a porous membrane,
   wherein the first crystallizable polyolefin polymer is the same as the second crystallizable polyolefin polymer,
   wherein the first nucleating agent and the second nucleating agent are the same,
   wherein the first concentration and the second concentration are different;
   wherein the first extruder is operated at a specific energy input, the second extruder is operated at a second specific energy input and the first specific energy input is not the same as the second specific energy input;
   and wherein the first specific energy input and the second specific energy input are made different by varying the screw speed of the first and second extruders, and a higher screw speed is used in the zone containing the lower concentration of the nucleating agent.

2. The method according to claim 1 further comprising at least partially removing the diluents from the porous membrane.

3. The method according to claim 1 further comprising stretching the porous membrane.

**4.** The method according to claim 1, wherein the first nucleating agent and second nucleating agent are independently melting nucleating agents or non-melting nucleating agents.

**5.** The method according to claim 1, wherein the amount of the first nucleating agent in the first zone and the amount of the second nucleating agent in the second zone are in a range from 0.1 wt% to 5.0 wt% based on the total weight of the particular zone.

**Patentansprüche**

**1.** Ein Verfahren zur Herstellung einer porösen Membran, wobei das Verfahren umfasst:

Bilden einer ersten Zusammensetzung in einem ersten Extruder, wobei die erste Zusammensetzung ein erstes kristallisierbares Polyolefinpolymer, ein erstes Nukleierungsmittel und ein Verdünnungsmittel umfasst, wobei die erste Zusammensetzung eine erste Konzentration des ersten Nukleierungsmittels aufweist;
Bilden einer zweiten Zusammensetzung in einem zweiten Extruder, wobei die zweite Zusammensetzung ein zweites kristallisierbares Polyolefinpolymer, ein zweites Nukleierungsmittel und ein Verdünnungsmittel umfasst, wobei die zweite Zusammensetzung eine zweite Konzentration des zweiten Nukleierungsmittels aufweist;
Coextrudieren der ersten Zusammensetzung und der zweiten Zusammensetzung, um einen mehrschichtigen Gegenstand zu bilden; und
Abkühlen des mehrschichtigen Gegenstands, um eine Phasentrennung des Verdünnungsmittels von den kristallisierbaren Polymeren zu ermöglichen, um eine poröse Membran zu bilden,
wobei das erste kristallisierbare Polyolefinpolymer dasselbe ist wie das zweite kristallisierbare Polyolefinpolymer,
wobei das erste Nukleierungsmittel und das zweite Nukleierungsmittel dieselben sind,
wobei die erste Konzentration und die zweite Konzentration verschieden sind;
wobei der erste Extruder mit einer spezifischen Energiezufuhr betrieben wird, der zweite Extruder mit einer zweiten spezifischen Energiezufuhr betrieben wird und die erste spezifische Energiezufuhr nicht dieselbe ist wie die zweite spezifische Energiezufuhr;
und wobei die erste spezifische Energiezufuhr und die zweite spezifische Energiezufuhr voneinander verschieden gemacht werden, indem die Schneckendrehzahl des ersten und des zweiten Extruders variiert wird und eine höhere Schneckendrehzahl in der Zone verwendet wird, die die geringere Konzentration des Nukleierungsmittels enthält.

**2.** Das Verfahren nach Anspruch 1, das ferner das mindestens teilweise Entfernen der Verdünnungsmittel aus der porösen Membran umfasst.

**3.** Das Verfahren nach Anspruch 1, das ferner das Strecken der porösen Membran umfasst.

**4.** Das Verfahren nach Anspruch 1, wobei es sich bei dem ersten Nukleierungsmittel und dem zweiten Nukleierungsmittel unabhängig voneinander um schmelzende Nukleierungsmittel oder nichtschmelzende Nukleierungsmittel handelt.

**5.** Das Verfahren nach Anspruch 1, wobei die Menge des ersten Nukleierungsmittels in der ersten Zone und die Menge des zweiten Nukleierungsmittels in der zweiten Zone in einem Bereich von 0,1 Gew.-% bis 5,0 Gew.-% liegen, basierend auf dem Gesamtgewicht der jeweiligen Zone.

**Revendications**

**1.** Procédé de fabrication d'une membrane poreuse, le procédé comprenant :

la formation d'une première composition dans une première extrudeuse, la première composition comprenant un premier polymère polyoléfinique cristallisable, un premier agent nucléant et un diluant, dans lequel la première composition a une première concentration du premier agent nucléant ;
la formation d'une deuxième composition dans une deuxième extrudeuse, la deuxième composition comprenant un deuxième polymère polyoléfinique cristallisable, un deuxième agent nucléant et un diluant, dans lequel la deuxième composition a une deuxième concentration du deuxième agent nucléant ;

la coextrusion de la première composition et de la deuxième composition pour former un article multicouche ; et le refroidissement de l'article multicouche pour permettre une séparation de phase du diluant par rapport aux polymères cristallisables pour former une membrane poreuse, dans lequel le premier polymère polyoléfinique cristallisable est identique au deuxième polymère polyoléfinique cristallisable, dans lequel le premier agent nucléant et le deuxième agent nucléant sont identiques, dans lequel la première concentration et la deuxième concentration sont différentes ; dans lequel la première extrudeuse est mise en oeuvre à un apport énergétique spécifique, la deuxième extrudeuse est mise en oeuvre à un deuxième apport énergétique spécifique et le premier apport énergétique spécifique n'est pas identique au deuxième apport énergétique spécifique ; et dans lequel le premier apport énergétique spécifique et le deuxième apport énergétique spécifique sont rendus différents en faisant varier la vitesse de vis des première et deuxième extrudeuses, et une vitesse de vis plus élevée est utilisée dans la zone contenant la concentration plus basse de l'agent nucléant.

2. Procédé selon la revendication 1, comprenant en outre l'élimination au moins partielle des diluants de la membrane poreuse.

3. Procédé selon la revendication 1, comprenant en outre l'étirage de la membrane poreuse.

4. Procédé selon la revendication 1, dans lequel le premier agent nucléant et le deuxième agent nucléant sont indépendamment des agents nucléants fondants ou des agents nucléants non fondants.

5. Procédé selon la revendication 1, dans lequel la quantité du premier agent nucléant dans la première zone et la quantité du deuxième agent nucléant dans la deuxième zone sont dans une plage allant de 0,1 % en poids à 5,0 % en poids sur la base du poids total de la zone particulière.

110 — Form a First Composition

120 — Form a Second Composition

130 — Coextrude the First and Second Compositions to Form an Article

140 — Cool the Article

150 — Remove Diluent

160 — Orient Article

*Fig. 1*

*Fig. 2*

*Fig. 3*

*Fig. 4*

**Fig. 5**

**Fig. 6**

**Fig. 7**

*Fig. 8A*

50.0 µm

*Fig. 8B*

20.0 µm

20.0 µm

*Fig. 8C*

*Fig. 9A*

60 µm

*Fig. 9B*

60 µm

*Fig. 9C*

wheel side

1000 ppm Millad

1000 ppm Millad + ppm phth. blue

air side

1000 ppm

**Fig. 9D**

100 µm

**Fig. 10**

*Fig. 11*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0042095 A
- WO 9849225 A
- US 5976686 A
- US 4726989 A
- US 4539256 A
- US 20050058821 A
- US 5120594 A
- US 20070154703 A, Waller